# FASCICULE DE BREVET EUROPEEN

(11) **EP 3 074 968 B1**
(45) Date de publication et mention de la délivrance du brevet: **14.08.2019**
(21) Numéro de dépôt: 14814941.2
(22) Date de dépôt: 24.11.2014
(51) Int. Cl.: G10K 15/02, B60Q 5/00

(54) **DISPOSITIF DE GÉNÉRATION D'UN SIGNAL SONORE REPRÉSENTATIF DE LA DYNAMIQUE D'UN VÉHICULE ET INDUISANT UNE ILLUSION AUDITIVE**
VORRICHTUNG ZUR ERZEUGUNG EINES KLANGSIGNALS ZUR DARSTELLUNG EINER FAHRZEUGDYNAMIK UND ZUR INDUKTION EINER AKUSTISCHEN TÄUSCHUNG
DEVICE FOR GENERATING A SOUND SIGNAL REPRESENTATIVE OF THE DYNAMICS OF A VEHICLE AND INDUCING AN AUDITORY ILLUSION

(30) Priorité: 28.11.2013 FR 1361747
(43) Date de publication de la demande: 05.10.2016
(73) Titulaire: PSA Automobiles SA, 78300 Poissy (FR); Centre National de la Recherche Scientifique, 75016 Paris (FR)
(72) Inventeur: DENJEAN, Sebastien, 92100 Boulogne Billancourt (FR); ROUSSARIE, Vincent, 75015 Paris (FR); KRONLAND MARTINET, Richard, 13009 Marseille (FR)
(86) Numéro de dépôt international: PCT/FR2014/053004
(87) Numéro de publication internationale: WO 2015/079149

(56) Documents cités:
- EP-A1- 2 565 082
- WO-A1-2012/098570
- WO-A1-2013/094467
- FR-A1- 2 946 786
- US-A1- 2006 177 797
- US-A1- 2011 241 868
- DENJEAN S ET AL: "An innovative method for the sonification of quiet cars", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 134, 1 janvier 2013 (2013-01-01), page 3979, XP007922797, ISSN: 0001-4966, DOI: 10.1121/1.4830499

## Description

L'invention concerne les dispositifs qui sont chargés de générer des signaux sonores représentatifs de la dynamique d'un véhicule.

On entend ici par « dynamique d'un véhicule » la vitesse en cours et l'accélération en cours d'un véhicule, ainsi qu'éventuellement certains contrôles dynamiques, comme par exemple la position en cours de la pédale d'accélération du véhicule.

L'utilisation de plus en plus répandue de véhicules à moteur(s) silencieux (par exemple électrique(s)) entraine un profond bouleversement du champ acoustique aussi bien pour les passagers de ces véhicules que pour les personnes situées à l'extérieur de ces derniers. Ce bouleversement se traduit par une perte d'informations utiles liées à la dynamique du véhicule et résultant de l'absence de son de moteur. Il est en effet bien connu que le bruit du moteur d'un véhicule aide à évaluer sa vitesse en cours et son accélération en cours, et/ou l'intention du conducteur.

Pour tenter de remédier à l'inconvénient précité, il a été proposé d'équiper un véhicule d'un dispositif de génération de signaux sonores (également appelé dispositif de « sonification »), chargé de recréer un bruit pouvant se substituer au bruit du moteur thermique et destiné à fournir des informations sur sa dynamique, et éventuellement contribuer à son image de marque.

La stratégie mise en oeuvre dans ce type de dispositif consiste généralement à générer un signal sonore dont la fréquence fondamentale croît avec la vitesse du véhicule. En effet, la principale piste de retour d'information sonore sur la dynamique d'un véhicule est basée sur l'évolution de la fréquence perçue (ou « pitch ») en fonction de la vitesse en cours de ce véhicule ou du régime moteur en cours de ce véhicule.

Pour générer ce type de signal sonore on peut utiliser un échantillonneur (ou « sampler ») multipiste capable de rejouer en boucle plusieurs pistes de sons préenregistrés, en contrôlant la relecture en fonction des paramètres dynamiques du véhicule (vitesse et accélération) ainsi qu'éventuellement d'actions du conducteur (comme par exemple la position en cours de la pédale d'accélération). Les différentes pistes constituent une espèce de matière sonore qui est ensuite mise en mouvement en fonction des paramètres de conduite. Par exemple, les différentes pistes sont associées respectivement à différents intervalles de vitesse du fait qu'il est établi qu'une personne ne perçoit pas la vitesse de façon linéaire.

Hélas, ces différentes pistes sont difficiles à créer, et le stockage dans un synthétiseur embarqué dans un véhicule d'un nombre important de pistes permettant de couvrir un nombre important d'intervalles de vitesses nécessiterait une très grande quantité de mémoire, ce qui est onéreux. En outre, les paramètres de lecture de chacune des pistes (comme par exemple la vitesse de lecture et l'intensité de diffusion) doivent être contrôlés de façon indépendante en fonction des paramètres dynamiques du véhicule. En effet, chaque piste informant sur un certain intervalle de vitesses, il faut déterminer à chaque instant l'intervalle de vitesses sur lequel chaque piste va servir de retour d'information, régler les contrôles en fonction des paramètres de conduite, assurer une cohérence entre le son et la dynamique du véhicule pour chaque piste, et enfin s'assurer de la cohérence globale après superposition des différentes pistes.

De plus, l'utilisation de pistes préenregistrées s'avère très limitée en termes de personnalisation et/ou de style sonore. On ne peut en effet utiliser que les sons qui ont été préalablement stockés dans un synthétiseur, et la moindre modification de son nécessite le chargement d'une nouvelle piste. Une fois les sons chargés, la seule marge de manoeuvre se situe dans le contrôle.

Enfin, les pistes sont définies avant d'être mises en mouvement en fonction des paramètres de conduite. Or, certaines « matières sonores » se prêtent très mal aux modifications entrainées par la mise en mouvement de ces sons, avec de fortes pertes en termes de qualité sonore et d'esthétique sonore.

Par ailleurs, si l'on voulait reproduire les sons d'un moteur thermique dans un véhicule électrique (ou hybride), sans passages de rapports, on devrait prendre en compte la présence des décrochages de la fréquence fondamentale lors de chaque changement de rapport, ce qui serait très mal perçu. Dans un véhicule électrique (ou hybride), on est donc contraint de faire varier continument la fréquence en fonction de la vitesse, ce qui nécessite une gamme de fréquences très importante pour pouvoir être au moins aussi informatif que le bruit moteur sur toute la plage de vitesse du véhicule. En effet, le bruit moteur n'informe que sur une plage de vitesse limitée (sur un rapport seulement) par ses variations de fréquence. Si l'on voulait informer continument sur toute la plage de vitesse, cela imposerait une variation de fréquence bien trop importante, qui ne serait alors plus acceptable par le conducteur. Au contraire, si l'on choisissait de conserver la gamme de fréquences du bruit moteur pour informer sur toute la plage de vitesses du véhicule, il faudrait alors faire varier le son nettement moins vite, et on diminuerait alors fortement la précision et la quantité d'information portée par le son.

US2006/177797 divulgue un dispositif de génération d'un signal sonore représentatif de la dynamique d'un véhicule. Le signal de sortie est décalé en fréquence en fonction de la vitesse moteur. De plus, le signal peut être traité avec des filtres passe-bandes en fonction de la vitesse moteur ainsi que des filtres en peigne.

L'invention a notamment pour but d'améliorer la situation.

Elle propose notamment à cet effet un dispositif selon la revendication 1, destiné à générer un signal sonore représentatif de la dynamique d'un véhicule, et comprenant des moyens de synthèse de sons agencés pour synthétiser ce signal sonore en vue de sa diffusion par un système de diffusion de sons, en fonction de paramètres représentatifs de la dynamique en cours du véhicule.

Ce dispositif se caractérise par le fait qu'il comprend des moyens de traitement agencés :
- pour définir i) une fenêtre fréquentielle en fonction d'au moins une vitesse en cours du véhicule, ii) un décalage de cette fenêtre fréquentielle en fonction d'une variation en cours de cette vitesse en cours, et iii) une vitesse de balayage d'un peigne d'au moins trois composantes spectrales en fonction d'au moins une accélération en cours du véhicule, et
- pour fournir aux moyens de synthèse de sons les définitions au moins de la fenêtre fréquentielle, de la vitesse de balayage associée au peigne, et du décalage de la fenêtre fréquentielle, de sorte qu'ils synthétisent un signal sonore à diffuser en fonction de ces définitions fournies.

On entend ici par « composante spectrale » aussi bien un sinus pur (ou harmonique) qu'un bruit en bande étroite.

Ce contrôle de la variation de la fréquence du signal sonore synthétisé en fonction de la position et/ou la largeur de la fenêtre fréquentielle et de la vitesse de balayage du peigne, eux-mêmes fonction au moins de la vitesse en cours et de l'accélération en cours du véhicule, permet de contrôler précisément le retour d'information sur la dynamique du véhicule qui est donné par le signal sonore aux auditeurs.

Le dispositif selon l'invention peut comporter d'autres caractéristiques qui peuvent être prises séparément ou en combinaison, et notamment :
- ses moyens de traitement peuvent être agencés pour définir la fenêtre fréquentielle par une fréquence centrale, une largeur fréquentielle, et une fonction de variation d'amplitude centrée sur cette fréquence centrale ;
   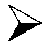 la fonction de variation peut être une gaussienne ;
   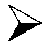 ses moyens de traitement peuvent être agencés pour choisir un rapport d'une octave entre une fréquence minimale et la fréquence centrale, et un autre rapport d'une octave entre la fréquence centrale et une fréquence maximale ;
   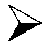 ses moyens de traitement peuvent être agencés pour choisir la fréquence centrale en fonction d'une loi prédéfinie d'évolution de la fréquence centrale en fonction de la vitesse en cours du véhicule. Par exemple, cette loi peut présenter un profil linéaire, exponentiel ou de puissance ;
   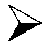 ses moyens de traitement peuvent être agencés pour choisir le nombre de composantes spectrales du peigne et/ou la largeur de la fenêtre fréquentielle en fonction d'au moins un paramètre de conduite du véhicule ;
- ses moyens de traitement peuvent être agencés pour définir la fenêtre fréquentielle en fonction également de l'accélération en cours et/ou de la position en cours de la pédale d'accélération du véhicule et/ou d'une information représentative du niveau d'éclairement à l'extérieur du véhicule ;
- ses moyens de traitement peuvent être agencés pour déterminer les position et/ou largeur de la fenêtre fréquentielle afin de permettre une localisation du son synthétisé dans une zone choisie par le conducteur (et donc adaptée à son audition). Cela permet en effet à des personnes présentant une déficience auditive d'entendre les sons synthétisés ;
- ses moyens de traitement peuvent être agencés pour définir la vitesse de balayage du peigne en fonction également de la vitesse en cours et/ou de la position en cours de la pédale d'accélération du véhicule et/ou d'une information représentative du niveau d'éclairement à l'extérieur du véhicule ;
- les moyens de traitement peuvent être agencés de sorte que le peigne se retrouve dans un même état (harmoniques à la même fréquence) pour au moins une vitesse donnée. Cela permet de renseigner le conducteur sur l'atteinte d'une vitesse particulière avec un son synthétisé reconnaissable ;
- ses moyens de traitement peuvent être agencés pour déterminer un niveau sonore de diffusion du signal sonore en fonction de la vitesse en cours du véhicule ;
- ses moyens de traitement peuvent être agencés pour définir une modulation d'amplitude, devant être appliquée sur les composantes spectrales contenues dans une fenêtre fréquentielle, en fonction de la vitesse en cours ;
- il peut comprendre le système de diffusion de sons.

L'invention propose également un véhicule, éventuellement de type automobile, et comprenant un dispositif de génération du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique et fonctionnelle un véhicule automobile muni d'un système de diffusion de sons et d'un exemple de réalisation d'un dispositif de génération selon l'invention,
- la figure 2 illustre de façon schématique au sein d'un diagramme d'amplitude en fonction de la fréquence, un exemple de peigne (PH) complet et un exemple de fenêtre fréquentielle (FF) en déplacement à deux instants différents,
- la figure 3 illustre de façon schématique au sein d'un diagramme un exemple d'évolution temporelle de la vitesse en cours d'un véhicule,
- la figure 4 illustre de façon schématique au sein d'un diagramme un exemple d'évolution temporelle de la fréquence centrale d'un signal sonore synthétisé grâce à un dispositif de génération selon l'invention, en présence d'une vitesse en cours évoluant comme illustré sur la figure 3, et
- la figure 5 illustre de façon schématique au sein d'un diagramme un exemple d'évolution temporelle de la fréquence perçue (ou pitch) par une personne en présence du signal sonore synthétisé illustré sur la figure 4.

L'invention a notamment pour but de proposer un dispositif de génération D destiné à générer des signaux sonores représentatifs de la dynamique d'un véhicule V.

Dans ce qui suit on considère, à titre d'exemple illustratif et non limitatif, que le dispositif de génération D est destiné à être installé dans un véhicule V. Mais l'invention n'est pas limitée à cette application. Elle concerne en effet également les ordinateurs (ou équipements électroniques analogues) qui sont chargés d'associer à un véhicule (éventuellement de synthèse) un signal sonore représentatif de sa dynamique pour une séquence vidéo ou de cinéma.

Par ailleurs, on considère dans ce qui suit, à titre d'exemple illustratif et non limitatif, que le véhicule est de type automobile et tout électrique. Mais l'invention n'est pas limitée à ce type de véhicule. Elle concerne en effet tout type de véhicule comprenant au moins un moteur, silencieux ou non, et destiné à circuler sur des voies de circulation terrestres ou fluviales (ou maritimes).

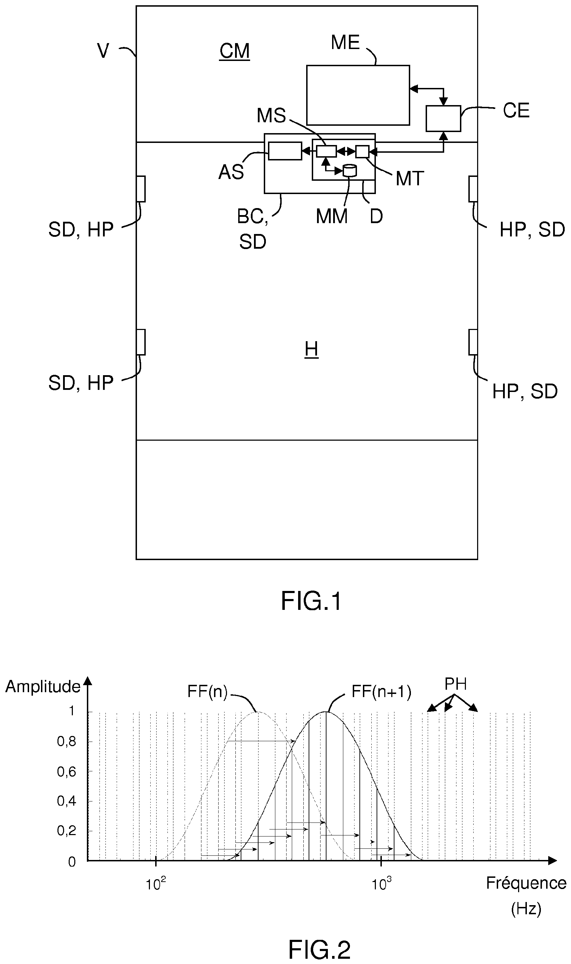

On a schématiquement représenté sur la figure 1 un véhicule V muni d'un moteur ME (ici de type électrique), implanté dans un compartiment moteur CM, et d'un exemple de réalisation d'un dispositif de génération D selon l'invention. Le moteur ME est ici couplé à un calculateur électronique (ou microprocesseur) CE qui est chargé de contrôler son fonctionnement en fonction de commandes fournies par son conducteur (notamment avec la pédale d'accélération (ou une commande analogue au volant) et de valeurs de paramètres et de grandeurs physiques délivrées, notamment, par des capteurs embarqués.

Parmi ces paramètres et grandeurs physiques, on peut notamment citer la vitesse en cours vv, le régime du moteur et la position (ou le niveau d'enfoncement) de la pédale d'accélération (ou commande au volant) par rapport à une position de référence. Ces paramètres et grandeurs physiques sont définis par des données numériques qui sont accessibles dans le véhicule V. Elles peuvent, par exemple, être transmises entre équipements électroniques via un réseau de communication, éventuellement multiplexé, qui est embarqué dans le véhicule V.

Un dispositif (de génération) D, selon l'invention, comprend au moins des moyens de synthèse de sons (ou synthétiseur) MS et des moyens de traitement MT.

Les moyens de synthèse de sons MS sont agencés pour synthétiser un signal sonore sur ordre des moyens de traitement MT, en vue de sa diffusion par un système de diffusion de sons SD.

Dans l'exemple illustré non limitativement sur la figure 1, le système de diffusion de sons SD est un équipement embarqué dans le véhicule V qui est destiné à diffuser des sons dans l'habitacle H. Il s'agit par exemple d'un autoradio ou d'un équipement à sources audio multiples (par exemple radio et lecteur de disques optiques (CD et/ou DVD) et/ou lecteur de cassettes à bandes magnétiques). Mais il pourrait également s'agir d'un équipement de diffusion audio et/ou vidéo, et éventuellement de navigation par satellites.

Le système de diffusion de sons SD comprend un boîtier BC comportant un amplificateur de signaux AS couplé à des haut-parleurs HP. Dans l'exemple illustré non limitativement sur la figure 1, les haut-parleurs HP sont implantés dans l'habitacle H, du fait qu'ils sont destinés à diffuser des signaux sonores dans ce dernier (H). Mais au moins un haut-parleur pourrait être implanté à l'extérieur de l'habitacle H pour diffuser des signaux sonores (éventuellement seulement ceux générés par le dispositif D) à destination des personnes qui sont situées à un instant donné dans l'environnement du véhicule V.

Par ailleurs, dans l'exemple illustré non limitativement sur la figure 1, le dispositif D est implanté dans le boîtier BC et couplé à son amplificateur AS. Mais dans une première variante ce dispositif D pourrait être externe au système de diffusion de sons SD tout en étant couplé à ce dernier (SD). Dans une seconde variante, le dispositif D pourrait comprendre son propre système de diffusion de sons SD avec au moins un haut-parleur propre à diffuser des signaux sonores à l'extérieur de l'habitacle H et/ou au moins un haut-parleur propre à diffuser des signaux sonores à l'intérieur de l'habitacle H.

Les moyens de traitement MT sont tout d'abord agencés pour définir, d'une première part, une fenêtre fréquentielle FF en fonction d'au moins la vitesse en cours vv du véhicule V, d'une deuxième part, un décalage df de cette fenêtre fréquentielle FF en fonction d'une variation en cours de cette vitesse en cours v, et, d'une troisième part, une vitesse de balayage vb d'un peigne PH d'au moins trois composantes spectrales (harmoniques ou bandes de bruit) en fonction d'au moins l'accélération en cours av du véhicule V.
On définit la vitesse de balayage comme étant le nombre d'octaves parcourus par l'harmonique fondamentale par seconde.

Il est important de noter que les composantes spectrales définissent un son de base (son timbre) que l'on met en mouvement en fonction au moins de la vitesse en cours vv et de l'accélération en cours av. Chaque composante spectrale peut, par exemple, être un son pur (fonction sinusoïdale) ou un son bruité (bruit en bande étroite). Le choix de différentes harmoniques et de la fenêtre fréquentielle FF permet de déterminer le timbre du son synthétisé.

La combinaison, du balayage des composantes spectrales d'un peigne PH qui sont contenues dans une fenêtre fréquentielle FF et du décalage fréquentiel de cette fenêtre fréquentielle FF lorsque la vitesse en cours vv augmente suivant l'accélération av, induit dans le cerveau de l'auditeur qui écoute le signal sonore synthétisé résultant l'illusion auditive que la fréquence perçue (ou pitch) fp augmente fortement et indéfiniment.

En d'autres termes, l'invention permet de donner un retour d'information sur la dynamique d'un véhicule V à partir d'une illusion auditive de perception d'un signal sonore qui semble avoir une fréquence perçue fp croissant indéfiniment, alors qu'elle reste contenue dans les limites de la fenêtre fréquentielle FF. Le déplacement de la fenêtre fréquentielle FF permet de contenir l'étendue de fréquence du son de synthèse. Cela permet d'informer le conducteur au mieux sur la dynamique de son véhicule V et/ou les piétons de l'arrivée d'un danger potentiel. En outre, cela confère un caractère technologique au véhicule V et améliore sa qualité perçue.

Le balayage du peigne PH permet d'augmenter la sensation d'évolution de la fréquence perçue fp. On peut ainsi donner la sensation d'une montée de fréquence aussi rapide que celle produite par un moteur thermique, sur toute la gamme de vitesses du véhicule V, mais en restant dans une gamme de fréquences restreinte et acceptable. La vitesse de balayage vb du peigne PH permet de contrôler le nombre d'octaves qui sont balayées par ce peigne PH en une seconde. Cette vitesse de balayage vb étant fonction au moins de l'accélération av du véhicule V, plus cette accélération av est importante, plus la vitesse vv varie vite, et donc plus la fréquence du signal sonore synthétisé variera rapidement.

Un exemple non limitatif de peigne PH complet et un exemple de fenêtre fréquentielle FF en déplacement à deux instants n et n+1 différents sont illustrés dans le diagramme d'évolution de l'amplitude (en unité arbitraire) en fonction de la fréquence (en Hertz) de la figure 2. Sur cette figure 2, les lignes verticales représentent les harmoniques du peigne complet et la cloche représente la fenêtre fréquentielle FF. Par ailleurs, les lignes verticales en pointillés représentent les positions respectives des harmoniques du peigne PH et de la fenêtre fréquentielle FF à l'instant n, tandis que les lignes verticales en trait plein représentent les positions respectives des harmoniques du peigne PH et de la fenêtre fréquentielle FF à l'instant n+1. De plus, les flèches horizontales représentent les déplacements de la fenêtre fréquentielle FF et de chacune des harmoniques du peigne PH entre les instants n et n+1.On obtient donc en trait plein gras la position de la fenêtre fréquentielle FF à l'instant n+1 et la portion du peigne PH qu'elle (FF) contient à cet instant n+1. Dans cet exemple, le peigne PH est représenté sur toute la largeur de la bande de fréquences qui est utilisée par les moyens de synthèse de sons MS. Mais, pratiquement, on n'utilise à chaque instant de traitement considéré que les seules composantes spectrales qui sont contenues dans l'enveloppe de la fenêtre fréquentielle FF définie pour l'instant de traitement considéré.

On notera que les moyens de traitement MT peuvent être agencés pour choisir le nombre de composantes spectrales que doit contenir le peigne PH contenu dans chaque fenêtre fréquentielle FF en fonction d'au moins un paramètre de conduite du véhicule V, comme par exemple le niveau d'éclairement à l'extérieur du véhicule V ou la position en cours de la pédale d'accélération.

Par exemple, les moyens de traitement MT peuvent être agencés pour définir chaque fenêtre fréquentielle FF par une fréquence centrale fc, une largeur fréquentielle If, et une fonction de variation d'amplitude centrée sur cette fréquence centrale fc. On entend ici par « largeur fréquentielle If » l'écart de fréquences entre les fréquences minimale et maximale d'une fenêtre fréquentielle FF. On notera que les moyens de traitement MT peuvent être agencés pour choisir la largeur fréquentielle If de chaque fenêtre fréquentielle FF en fonction d'au moins un paramètre de conduite du véhicule V, comme par exemple le niveau d'éclairement à l'extérieur du véhicule V ou la position en cours de la pédale d'accélération.

On notera que la largeur fréquentielle If de la fenêtre fréquentielle FF peut aussi être avantageusement contrôlée de manière à augmenter la fréquence perçue, en addition ou en substitution du contrôle de la fréquence centrale fc (et donc de la position de la fenêtre fréquentielle FF). Cette largeur fréquentielle If est contrôlée en fonction de la vitesse en cours et éventuellement de l'accélération en cours du véhicule V.

Par ailleurs, différentes fonctions de variation définissant différentes formes d'enveloppe peuvent être utilisées pour la fenêtre fréquentielle FF. Cette enveloppe permet de contrôler le niveau (ou l'amplitude) des différentes composantes spectrales qui vont composer le signal sonore à synthétiser.

A titre d'exemple non limitatif, les moyens de traitement MT peuvent utiliser une fonction de variation de type gaussienne, comme dans l'exemple illustré sur la figure 2. Avec ce type de fenêtre fréquentielle FF le niveau est très faible dans les deux queues de la gaussienne, et donc les composantes spectrales sont inaudibles, tandis qu'au centre de la gaussienne (défini par fc) le niveau des composantes spectrales est maximal. On entend donc les variations de fréquence dues au balayage du peigne PH très distinctement dans la zone centrale de la fenêtre fréquentielle FF, sans entendre que d'autres composantes spectrales entrent et sortent de cette fenêtre fréquentielle FF.

Mais d'autres fonctions de variation connues de l'homme de l'art peuvent être utilisées, et notamment une fonction triangulaire. Plus généralement, toute fonction qui admet des minima à ses bornes et un maximum entre ses bornes (éventuellement en son centre (fc)), et qui est symétrique ou non, peut être utilisée. Ainsi, toute fonction de variation ayant une première portion croissante et une dernière portion décroissante, avec éventuellement un palier constant entre ces deux portions, peut être utilisée.

On notera que les moyens de traitement MT peuvent être avantageusement agencés pour choisir un rapport d'une octave entre la fréquence minimale et la fréquence centrale fc de la fenêtre fréquentielle FF qu'il définit, et un autre rapport d'une octave entre la fréquence centrale fc et la fréquence maximale de cette même fenêtre fréquentielle FF. Cela améliore en effet l'illusion auditive de variation de fréquence infinie.

La fréquence centrale fc définit la position de la fenêtre fréquentielle FF. Par conséquent, le fait de la choisir en fonction, au moins, de la vitesse en cours vv, permet d'avoir une fréquence moyenne du signal sonore à synthétiser qui augmente avec cette vitesse en cours vv. Sa position varie entre une position minimale correspond à une vitesse en cours vv nulle et une position maximale correspondant à une vitesse en cours vv maximale. Ces deux positions fréquentielles minimale et maximale fixent l'étendue fréquentielle maximale du signal sonore à synthétiser.

On notera également que les moyens de traitement MT peuvent être avantageusement agencés pour choisir la fréquence centrale fc de chaque fenêtre fréquentielle FF en fonction d'une loi prédéfinie d'évolution de la fréquence centrale en fonction de la vitesse en cours du véhicule V.

Par exemple, cette loi peut présenter un profil linéaire ou bien exponentiel ou encore de puissance. Cette loi peut être choisie de manière à être adaptée au mieux à la perception de vitesse du conducteur et à sa perception sonore. A titre d'exemple, une loi exponentielle entre la fréquence et la vitesse assurera un rapport linéaire entre la fréquence perçue et la vitesse du véhicule V.

On notera également que les moyens de traitement MT peuvent être agencés pour choisir la fréquence centrale fc de chaque fenêtre fréquentielle FF en fonction d'une loi d'évolution dont les limites sont définies par l'utilisateur, par exemple afin de s'adapter à ses capacités auditives et/ou à son confort.

On notera également que les moyens de traitement MT peuvent être agencés pour définir chaque fenêtre fréquentielle FF en fonction, en outre, de l'accélération en cours av et/ou de la position en cours de la pédale d'accélération du véhicule V et/ou d'une information qui est représentative du niveau d'éclairement à l'extérieur du véhicule V (information dite « jour/nuit ») et/ou d'une information qui est représentative du temps à l'extérieur du véhicule V (pluie, neige ou brouillard, notamment). Le contrôle de la fenêtre fréquentielle FF en fonction de l'accélération en cours av résulte du fait que la perception qu'à une personne de la vitesse en cours vv n'est pas linéaire en fonction de cette accélération en cours av. De même, le contrôle de la fenêtre fréquentielle FF en fonction du jour ou de la nuit résulte du fait que la perception qu'à une personne de la vitesse en cours vv varie selon que l'on est le jour ou la nuit.

On notera également que les moyens de traitement MT peuvent être agencés pour définir la vitesse de balayage vb du peigne PH en fonction, en outre, de la vitesse en cours vv et/ou de la position en cours de la pédale d'accélération du véhicule V et/ou d'une information qui est représentative du niveau d'éclairement à l'extérieur du véhicule V (information jour/nuit) et/ou d'une information qui est représentative du temps à l'extérieur du véhicule V (pluie, neige ou brouillard, notamment). Le contrôle de la vitesse de balayage vb du peigne PH en fonction de la vitesse en cours w résulte du fait que la perception qu'à une personne de la vitesse n'est pas linéaire en fonction de cette vitesse en cours vv. De même, le contrôle de la vitesse de balayage vb du peigne PH en fonction du jour ou de la nuit résulte du fait que la perception qu'à une personne de l'accélération varie selon que l'on est le jour ou la nuit.

On notera également que les moyens de traitement MT peuvent être avantageusement agencés pour que le peigne PH se retrouve dans un même état (composantes spectrales aux mêmes positions) à une (ou plusieurs) vitesse(s) donnée(s).

On notera également que les moyens de traitement MT peuvent être agencés pour déterminer le niveau sonore de diffusion du signal sonore à synthétiser en fonction de la vitesse en cours vv du véhicule V. On considère en effet ici que le niveau (ou volume) sonore du signal sonore à synthétiser doit toujours rester audible et émerger des bruits aérodynamique et de roulement du véhicule V, lesquels dépendent de la vitesse en cours vv de ce véhicule.

On notera également que les moyens de traitement MT peuvent être agencés pour définir une modulation d'amplitude, devant être appliquée sur les composantes spectrales contenues dans une fenêtre fréquentielle FF, en fonction de la vitesse en cours vv, ou de tout autre paramètre de conduite. Cette option est destinée à donner un rythme choisi, fonction de la modulation d'amplitude, au signal sonore à synthétiser.

Les moyens de traitement MT sont également agencés pour fournir aux moyens de synthèse de sons MS les définitions au moins de la fenêtre fréquentielle FF, de la vitesse de balayage vb associée au peigne PH, et du décalage df de la fenêtre fréquentielle FF, afin qu'ils génèrent un signal sonore à diffuser en fonction de ces définitions fournies.

On notera que les moyens de synthèse de sons MS peuvent par exemple générer (ou synthétiser) chaque signal sonore à partir d'au moins un son de base défini par des données numériques stockées dans des moyens de stockage MM du dispositif D. Les données numériques stockées peuvent également et préférentiellement concerner les paramètres qui permettent de définir le peigne PH, la fenêtre fréquentielle FF, ainsi que les lois qui relient chaque paramètre de synthèse sonore aux paramètres de conduite. Ces moyens de stockage MM peuvent se présenter sous toute forme connue de l'homme de l'art, et notamment sous la forme d'une mémoire de type RAM ou ROM.

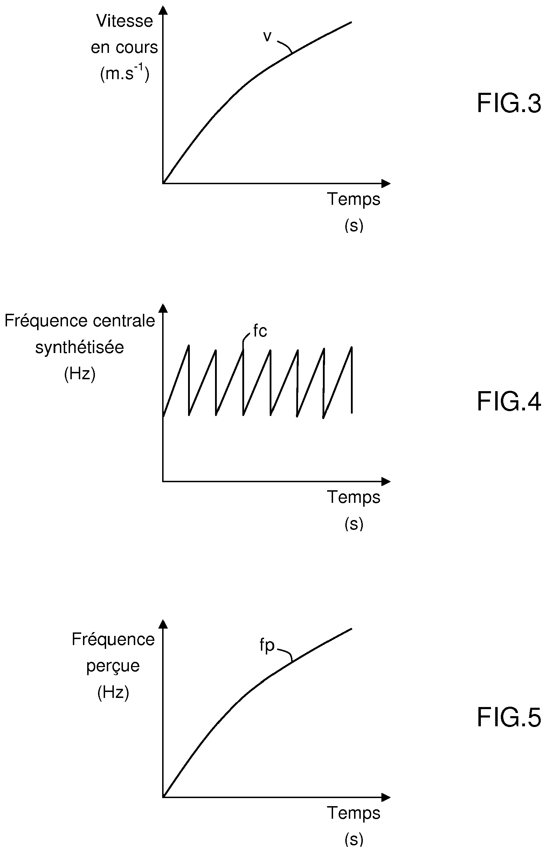

On a schématiquement représenté dans le diagramme de la figure 3 un exemple non limitatif de courbe d'évolution de la vitesse en cours vv d'un véhicule (en m.s⁻¹) en fonction du temps (en secondes), et on a schématiquement représenté dans le diagramme de la figure 4 un exemple d'évolution temporelle de la fréquence centrale fc d'un signal sonore, de type en dents de scie, synthétisé grâce à un dispositif D, en présence de la courbe d'évolution de la vitesse en cours vv de la figure 3. Lorsqu'une personne entend un tel signal sonore synthétisé, elle a l'illusion auditive d'entendre une fréquence perçue (ou pitch) fp qui évolue dans le temps comme illustré sur la figure 5, et donc qui suit sensiblement l'évolution de la vitesse en cours vv illustrée sur la figure 3.

### En synthèse :

Dans la présente invention, il est question d'un signal audio contenant des composantes fréquentielles (sinus purs ou fines bandes de bruit) ayant des fréquences définies.

Ces différentes composantes forment « un peigne harmonique ».

On définit la composition de ce peigne (rapports de fréquence entre les différentes composantes) dans l'intervalle d'une octave (a minima une composante harmonique), composition que l'on duplique ensuite aux octaves supérieures.

Les différentes fréquences des harmoniques composant le peigne (peine harmonique) sont donc toutes proportionnelles à leur harmonique fondamentale que l'on contrôle à partir d'une fonction de type « dent de scie ».

Le peigne harmonique « balaye » ainsi toute la plage de fréquences, à chaque période de la fonction dent de scie.

On définit la vitesse de balayage comme étant le nombre d'octaves parcourus par l'harmonique fondamentale par seconde.

Cette vitesse de balayage est directement dépendante de la fréquence de la fonction dent de scie.

Cette vitesse de balayage est contrôlée par au moins l'accélération du véhicule, suivant une relation qui peut être linéaire ou non. Elle peut aussi être contrôlée en fonction de la vitesse, d'autres paramètres dynamiques, de paramètres extérieurs, ou d'une combinaison de ces différents paramètres.

Ce peigne harmonique est ensuite fenêtré par l'enveloppe gaussienne, de largeur modifiable, et de fréquence centrale contrôlable par les paramètres dynamiques du véhicule (vitesse a minima, et/ou accélération, enfoncement pédale ou tout autre paramètre de conduite, voire extérieur afin d'adapter le son synthétisé à l'environnement ou au conducteur).

Cette enveloppe permet de définir le niveau à appliquer à chaque composante harmonique, en fonction de sa fréquence. Par exemple, on associe un niveau nul aux composantes dont les fréquences sont en dehors de la fenêtre, qui ne doivent pas être audibles.

On génère ainsi le signal en synthèse auditive, définissant les différentes fréquences des composantes par la fonction dent de scie, et leurs niveaux par la fenêtre.

L'enveloppe a pour rôle de rendre inaudible les composantes harmoniques dont les fréquences correspondent à ses valeurs extrêmes, et de niveau maximal les composantes dont la fréquence correspond à sa fréquence centrale.

Toute autre fonction qui ne serait pas gaussienne pouvant remplir ce rôle peut aussi être utilisée, le maximum n'étant d'ailleurs pas nécessairement atteint en la valeur centrale de la fenêtre. Elle peut donc être asymétrique.

Il est important de souligner que la présente invention se démarque par le choix de la structure du peigne (structure composée de « notes » qui se répètent d'une octave à l'autre) et de la fenêtre (niveaux maximums au centre et inaudibles en entrée et en sortie de la fenêtre lorsque le peigne balaye la plage de fréquence) qui permettent de générer une illusion auditive, donnant au conducteur la sensation que la fréquence augmente indéfiniment.

C'est donc dans l'agencement de l'enveloppe et du balayage du peigne que l'invention prend tout son sens.

L'illusion ainsi générée permet de donner la sensation à l'auditeur que la fréquence augmente continument et indéfiniment, bien qu'elle reste en réalité contenue dans l'intervalle de fréquence délimitée par la fenêtre.

L'auditeur entend en effet les variations de fréquences des composantes du peigne dans la zone où l'enveloppe est maximale, mais pas les composantes qui entrent ou sortent de cette fenêtre lors du balayage du peigne de composantes harmoniques. Il perçoit ainsi la variation de fréquence, et « reconstitue » l'image mentale d'un signal dont la fréquence augmente indéfiniment.

On peut ainsi donner une forte sensation d'accélération au conducteur par l'intermédiaire de la fréquence perçue, sans pour autant atteindre des fréquences trop élevées lors de longues accélérations. Une telle variation de fréquence permet de donner une information précise au conducteur sur sa dynamique, tout en restant bornée dans un intervalle choisi pour éviter que le son n'atteigne des fréquences trop élevées pour ne pas devenir gênante. Un tel retour d'information serait impossible à atteindre sans utiliser cette illusion.

Avec un choix arbitraire de composantes harmoniques et de fenêtre, il faudrait nécessairement faire un choix entre la dynamique de variation de la fréquence (et donc de la finesse des informations rendues) et les bornes de variations de fréquences. En conservant une forte dynamique de variation, on atteindrait des fréquences désagréables à haute vitesse, ou réciproquement, en fixant des limites acceptables la dynamique de variation ne permettrait pas de donner un retour d'information précis.

Il est précisé enfin que l'objectif de la présente invention n'est pas de reproduire un bruit moteur, mais de créer un bruit nouveau qui pourrait rendre, dans les véhicules à motorisations silencieuses, une partie des informations qui sont généralement portées par le bruit moteur.

Contrairement aux techniques de l'art antérieur, on n'a ici besoin que d'une unique piste pour informer sur toute la gamme de vitesse d'un véhicule. De plus, les sons perçus grâce à l'illusion auditive offrent de grandes possibilités de conception (ou « design »), y compris dans le cadre d'une personnalisation. On peut en effet modifier leur contenu harmonique et ainsi obtenir de nombreux autres sons, très variés, sans avoir besoin de développements supplémentaires. Il suffit en effet pour ce faire de modifier les données numériques précitées qui sont stockées dans les moyens de stockage du dispositif.

## Revendications

1. Dispositif (D) de génération d'un signal sonore représentatif de la dynamique d'un véhicule (V), ledit dispositif (D) comprenant des moyens de synthèse de sons (MS) agencés pour synthétiser ledit signal sonore en vue de sa diffusion par un système de diffusion de sons (SD), en fonction de paramètres représentatifs de la dynamique en cours dudit véhicule (V), **caractérisé en ce qu'**il comprend des moyens de traitement (MT) agencés pour définir i) une fenêtre fréquentielle en fonction d'au moins une vitesse en cours dudit véhicule (V), ii) un décalage de cette fenêtre fréquentielle en fonction d'une variation en cours de cette vitesse en cours, et iii) une vitesse de balayage d'un peigne d'au moins trois composantes spectrales en fonction d'au moins une accélération en cours dudit véhicule (V), et pour fournir auxdits moyens de synthèse de sons (MS) lesdites définitions au moins de cette fenêtre fréquentielle, de cette vitesse de balayage associée audit peigne, et de ce décalage de ladite fenêtre fréquentielle, de sorte qu'ils synthétisent un signal sonore à diffuser en fonction desdites définitions fournies.

2. Dispositif selon la revendication 1, **caractérisé en ce que** lesdits moyens de traitement (MT) sont agencés pour définir ladite fenêtre fréquentielle par une fréquence centrale, une largeur fréquentielle, et une fonction de variation d'amplitude centrée sur ladite fréquence centrale.

3. Dispositif selon la revendication 2, **caractérisé en ce que** lesdits moyens de traitement (MT) sont agencés pour choisir un rapport d'une octave entre une fréquence minimale et ladite fréquence centrale, et un autre rapport d'une octave entre ladite fréquence centrale et une fréquence maximale.

4. Dispositif selon l'une des revendications 2 à 3, **caractérisé en ce que** lesdits moyens de traitement (MT) sont agencés pour choisir ladite fréquence centrale en fonction d'une loi prédéfinie d'évolution de la fréquence centrale en fonction de la vitesse en cours du véhicule (V).

5. Dispositif selon l'une des revendications 1 à 4, **caractérisé en ce que** lesdits moyens de traitement (MT) sont agencés pour définir ladite fenêtre fréquentielle en fonction en outre de ladite accélération en cours et/ou d'une position en cours d'une pédale d'accélération dudit véhicule (V) et/ou d'une information représentative d'un niveau d'éclairement à l'extérieur dudit véhicule (V).

6. Dispositif selon l'une des revendications 1 à 5, **caractérisé en ce que** lesdits moyens de traitement (MT) sont agencés pour définir ladite vitesse de balayage du peigne en fonction en outre de ladite vitesse en cours et/ou d'une position en cours d'une pédale d'accélération dudit véhicule (V) et/ou d'une information représentative d'un niveau d'éclairement à l'extérieur dudit véhicule (V).

7. Dispositif selon l'une des revendications 1 à 6, **caractérisé en ce que** lesdits moyens de traitement (MT) sont agencés pour définir une modulation d'amplitude, devant être appliquée sur lesdites composantes spectrales contenues dans ladite fenêtre fréquentielle, en fonction de ladite vitesse en cours.

8. Dispositif selon l'une des revendications 1 à 7, **caractérisé en ce que** lesdits moyens de traitement (MT) sont agencés pour déterminer un niveau sonore de diffusion dudit signal sonore en fonction de ladite vitesse en cours du véhicule (V).

9. Dispositif selon l'une des revendications 1 à 8, **caractérisé en ce qu'**il comprend ledit système de diffusion de sons (SD).

10. Véhicule, **caractérisé en ce qu'**il comprend en outre un dispositif de génération (D) selon l'une des revendications précédentes.

## Patentansprüche

1. Vorrichtung (D) zur Erzeugung eines Klangsignals, das für die Dynamik eines Fahrzeugs (V) repräsentativ ist, wobei die Vorrichtung (D) Mittel zum Synthetisieren von Klängen (MS) umfasst, die eingerichtet sind, um das Klangsignal zu seiner Verteilung durch ein Klangverteilungssystem (SD) in Abhängigkeit von Parametern, die für die aktuelle Dynamik des Fahrzeugs (V) repräsentativ sind, zu synthetisieren, **dadurch gekennzeichnet, dass** sie Verarbeitungsmittel (MT) umfasst, die eingerichtet sind, um i) ein Frequenzfenster in Abhängigkeit von mindestens einer aktuellen Geschwindigkeit des Fahrzeugs (V), ii) einen Versatz dieses Frequenzfensters in Abhängigkeit von einer aktuellen Variation dieser aktuellen Geschwindigkeit, und iii) eine Abtastgeschwindigkeit eines Kamms aus mindestens drei spektralen Komponenten in Abhängigkeit von mindestens einer aktuellen Beschleunigung des Fahrzeugs (V) zu definieren, und um den Mitteln zum Synthetisieren von Klängen (MS) die Definitionen mindestens dieses Frequenzfensters, dieser Abtastgeschwindigkeit, die mit dem Kamm assoziiert ist, und dieses Versatzes des Frequenzfensters derart zu liefern, dass sie ein Klangsignal synthetisieren, das in Abhängigkeit von den gelieferten Definitionen zu verteilen ist.

2. Vorrichtung nach Anspruch 1, **dadurch gekennzeichnet, dass** die Verarbeitungsmittel (MT) eingerichtet sind, um das Frequenzfenster durch eine zentrale Frequenz, eine Frequenzbreite und eine Amplitudenvariationsfunktion, die auf der zentralen Frequenz zentriert ist, zu definieren.

3. Vorrichtung nach Anspruch 2, **dadurch gekennzeichnet, dass** die Verarbeitungsmittel (MT) eingerichtet sind, um ein Oktavenverhältnis zwischen einer Mindestfrequenz und der zentralen Frequenz, und ein anderes Oktavenverhältnis zwischen der zentralen Frequenz und einer maximalen Frequenz auszuwählen.

4. Vorrichtung nach einem der Ansprüche 2 bis 3, **dadurch gekennzeichnet, dass** die Verarbeitungsmittel (MT) eingerichtet sind, um die zentrale Frequenz in Abhängigkeit von einem vordefinierten Entwicklungsgesetz der zentralen Frequenz in Abhängigkeit von der aktuellen Geschwindigkeit des Fahrzeugs (V) auszuwählen.

5. Vorrichtung nach einem der Ansprüche 1 bis 4, **dadurch gekennzeichnet, dass** die Verarbeitungsmittel (MT) eingerichtet sind, um das Frequenzfenster in Abhängigkeit außerdem von der aktuellen Beschleunigung und/oder einer aktuellen Position eines Gaspedals des Fahrzeugs (V) und/oder einer Information, die für ein Beleuchtungssystem außerhalb des Fahrzeugs (V) repräsentativ ist, zu definieren.

6. Vorrichtung nach einem der Ansprüche 1 bis 5, **dadurch gekennzeichnet, dass** die Verarbeitungsmittel (MT) eingerichtet sind, um die Abtastgeschwindigkeit des Kamms in Abhängigkeit außerdem von der aktuellen Geschwindigkeit und/oder einer aktuellen Position des Gaspedals des Fahrzeugs (V) und/oder einer Information, die für ein Beleuchtungsniveau außerhalb des Fahrzeugs (V) repräsentativ ist, zu definieren.

7. Vorrichtung nach einem der Ansprüche 1 bis 6, **dadurch gekennzeichnet, dass** die Verarbeitungsmittel (MT) eingerichtet sind, um eine Amplitudenmodulation zu definieren, die auf die spektralen Komponenten, die in dem Frequenzfenster enthalten sind, in Abhängigkeit von der aktuellen Geschwindigkeit anzuwenden sind.

8. Vorrichtung nach einem der Ansprüche 1 bis 7, **dadurch gekennzeichnet, dass** die Verarbeitungsmittel (MT) eingerichtet sind, um einen Verteilungsschallpegel in Abhängigkeit von der aktuellen Geschwindigkeit des Fahrzeugs (V) zu bestimmen.

9. Vorrichtung nach einem der Ansprüche 1 bis 8, **dadurch gekennzeichnet, dass** sie das Klangverteilungssystem (SD) umfasst.

10. Fahrzeug, **dadurch gekennzeichnet, dass** es außerdem eine Erzeugungseinheit (D) nach einem der vorstehenden Ansprüche umfasst.

## Claims

1. A device (D) for generating a sound signal representative of the dynamics of a vehicle (V), said device (D) including means for synthesis of sounds (MS) arranged to synthesise said sound signal for the purpose of its broadcasting by a system for broadcasting of sounds (SD), as a function of representative parameters of the current dynamics of said vehicle (V), **characterized in that** it includes processing means (MT) arranged so as to define i) a frequency window as a function of at least one current speed of said vehicle (V), ii) a shift of this frequency window as a function of a current variation of this current speed, and iii) a scan speed of a comb of at least three spectral components as a function of at least one current acceleration of said vehicle (V), and to provide to said sound synthesis means (MS) said definitions at least of this frequency window, of this scan speed associated with said comb, and of this shift of said frequency window, so that they synthesise a sound signal to be broadcast as a function of said provided definitions.

2. The device according to Claim 1, **characterized in that** said processing means (MT) are arranged so as to define said frequency window by a central frequency, a frequency width, and an amplitude variation function centred on said central frequency.

3. The device according to Claim 2, **characterized in that** said processing means (MT) are arranged so as to select a ratio of one octave between a minimum frequency and said central frequency, and another ratio of one octave between said central frequency and a maximum frequency.

4. The device according to one of Claims 2 to 3, **characterized in that** said processing means (MT) are arranged so as to select said central frequency as a function of a predefined law of development of the central frequency as a function of the current speed of the vehicle (V).

5. The device according to one of Claims 1 to 4, **characterized in that** said processing means (MT) are arranged so as to define said frequency window as a function, furthermore, of said current acceleration and/or of a current position of an accelerator pedal of said vehicle (V) and/or of information representative of a level of illumination at the exterior of said vehicle (V).

6. The device according to one of Claims 1 to 5, **characterized in that** said processing means (MT) are arranged so as to define said scan speed of the comb as a function, furthermore, of said current speed and/or of a current position of an accelerator pedal of said vehicle (V) and/or of information representative of a level of illumination at the exterior of said vehicle (V).

7. The device according to one of Claims 1 to 6, **characterized in that** said processing means (MT) are arranged so as to define an amplitude modulation, to be applied on said spectral components contained in said frequency window, as a function of said current speed.

8. The device according to one of Claims 1 to 7, **characterized in that** said processing means (MT) are arranged so as to determine a broadcasting sound level of said sound signal as a function of said current speed of the vehicle (V).

9. The device according to one of Claims 1 to 8, **characterized in that** it includes said sound broadcasting system (SD).

10. A vehicle, **characterized in that** it includes, furthermore, a generating device (D) according to one of the preceding claims.
